# EUROPÄISCHE PATENTSCHRIFT

(11) **EP 2 808 566 B1**
(45) Veröffentlichungstag und Bekanntmachung des Hinweises auf die Patenterteilung: **28.06.2017**
(21) Anmeldenummer: 14156622.4
(22) Anmeldetag: 25.02.2014
(51) Int. Cl.: F16B 12/20

(54) **Spreizverbinder**
Expanding connector
Cheville à expansion

(30) Priorität: 31.05.2013 DE 202013102366 U
(43) Veröffentlichungstag der Anmeldung: 03.12.2014
(73) Patentinhaber: Häfele GmbH & Co KG, 72202 Nagold (DE)
(72) Erfinder: Nitschmann, Gunter, 72202 Nagold (DE)
(74) Vertreter: Kohler Schmid Möbus Patentanwälte

(56) Entgegenhaltungen:
- EP-A1- 1 008 767
- EP-A2- 1 530 926
- DE-U1- 20 219 178
- DE-U1-202007 009 771
- GB-A- 2 301 412

## Beschreibung

Die Erfindung betrifft einen Spreizverbinder zum Verbinden zweier Möbelteile, umfassend einen Einbautopf, der mit seinem Topfboden voran in eine Topfbohrung des einen Möbelteils einpressbar ist und dessen hohlzylindrische Topfwandung eine Wandöffnung und mindestens eine in der hohlzylindrischen Topfwandung freigeschnittene, um eine tangential zur hohlzylindrischen Topfwandung verlaufende Achse schwenkbare Spreizlasche aufweist, sowie ein innerhalb des Einbautopfes drehbar gelagertes Anzugselement zum Anziehen eines durch die Wandöffnung hindurchgreifenden Spannbolzens des anderen Möbelteils, wobei das Anzugselement eine äußere Exzenterfläche zum Aufspreizen der mindestens einen Spreizlasche aufweist.
Derartige Spreizverbinder sind z.B. für Holz- oder Spanplatten hinlänglich bekannt. Ein gattungsgemäßer Spreizverbinder nach dem Oberbegiff des Anspruchs 1 ist aus DE 202 19 178 U1 bekannt. Für eine gute Funktion ist ein fester Sitz des Spreizverbinders in der Topfbohrung des Möbelteils zu erreichen. Dies wird im Normalfall durch einen um ca. 0,5mm größeren Durchmesser des Einbautopfes gegenüber dem Bohrungsdurchmesser erreicht, d.h., der Spreizverbinder muss für diese Presspassung eingeschlagen werden.
Es gibt auch Spreizverbinder, die sich einfach in die Bohrung eindrücken lassen. Bei solchen Spreizverbindern wird die Drehbewegung des Anzugselementes zum Verspannen des Spannbolzens dann auch zur Aufspreizung von Spreizlaschen verwendet, die in der hohlzylindrischen Topfwandung freigeschnitten sind und sich um eine tangential zur hohlzylindrischen Topfwandung verlaufende Achse abspreizen. Da sich die Spreizlaschen mit ihrem freien Laschenende in Richtung auf den Topfboden des Einbautopfes erstrecken, erfolgt die Spreizung nicht im oberflächennahen Wandungsbereich der Topfbohrung, sondern im oberflächenfernen Mittelbereich. Bei Spanplatten, bei denen der Mittelbereich eine deutlich geringere Dichte und geringere Festigkeit als die auf den äußeren 2-3mm zusätzlich verdichteten oberflächennahen Randbereiche aufweist, liegt die maximale Spreizung somit in der nicht verdichteten Mittellage, so dass hier die Spreizwirkung nicht optimal ist.
Demgegenüber ist es die Aufgabe der vorliegenden Erfindung, einen Spreizverbinder der eingangs genannten Art dahingehend zu verbessern, dass insbesondere in Spanplatten eine bessere Spreizwirkung erreicht werden kann.
Diese Aufgabe wird erfindungsgemäß dadurch gelöst, dass sich die mindestens eine, insbesondre U-förmige ausgeschnittene Spreizlasche mit ihrem freien Laschenende in axialer Richtung fort von dem Topfboden erstreckt. Erfindungsgemäß erfolgt die Spreizung der Spreizlasche somit in dem gegenüber der Mittellage verdichteten oberflächennahen Randbereich, so dass die Spreizwirkung bzw. die Kraftübertragung optimal ist.

Vorzugsweise ist die mindestens eine Spreizlasche an dem dem Topfboden zugewandten Endbereich der hohlzylindrischen Topfwandung angebunden, und zwar vorteilhaft axial beabstandet zum Topfboden.

Besonders bevorzugt ist das freie Laschenende der mindestens einen Spreizlasche von einem nach außen über die hohlzylindrische Topfwandung vorstehenden Anschlagrand des Einbautopfes um mindestens 1 mm, vorzugsweise um mindestens 2mm, axial beabstandet. Das freie Laschenende bildet somit einen entgegen der Einpressrichtung des Einbautopfes wirkenden Hinterschnitt, der sich in das Holzmaterial der Bohrungswandung eingräbt und für eine zusätzliche Verankerung sorgt.

Vorzugsweise weist die hohlzylindrische Topfwandung mindestens zwei einander bezüglich des Anzugselements gegenüberliegende freigeschnittene Spreizlaschen auf, die jeweils mit einer äußeren Exzenterfläche des Anzugselements zusammenwirken.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a-1c: den erfindungsgemäßen Spreizverbinder in zwei perspektivischen Ansichten (Fign. 1a, 1b) und in einer Seitenansicht (Fig. 1c);
- Fign. 2a, 2b: zwei unterschiedliche Explosionsdarstellungen des erfindungsgemäßen Spreizverbinders; und
- Fign. 3a, 3b: einen Einbautopf des erfindungsgemäßen Spreizverbinders in einer perspektivischen Ansicht (Fig. 3a) und in einer Seitenansicht (Fig. 3b).

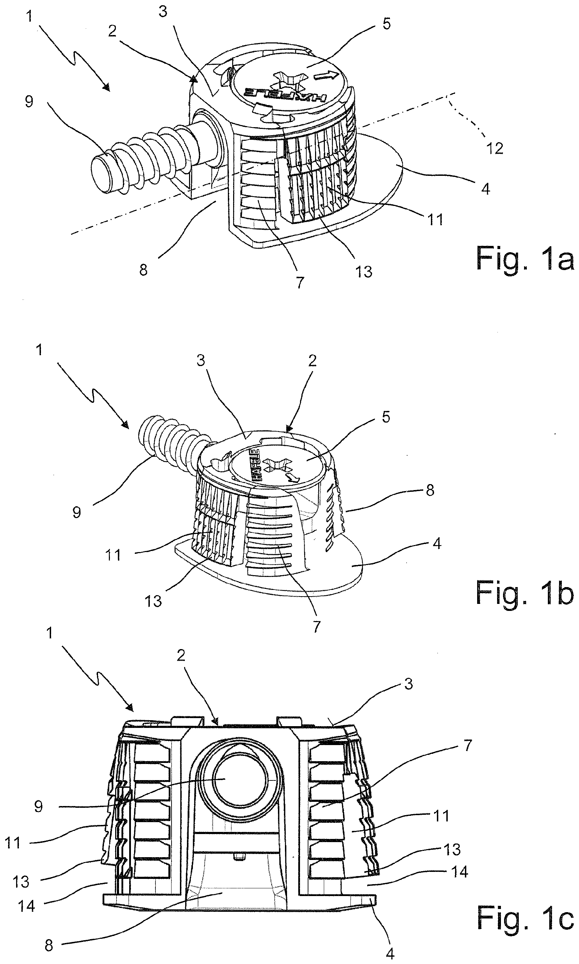

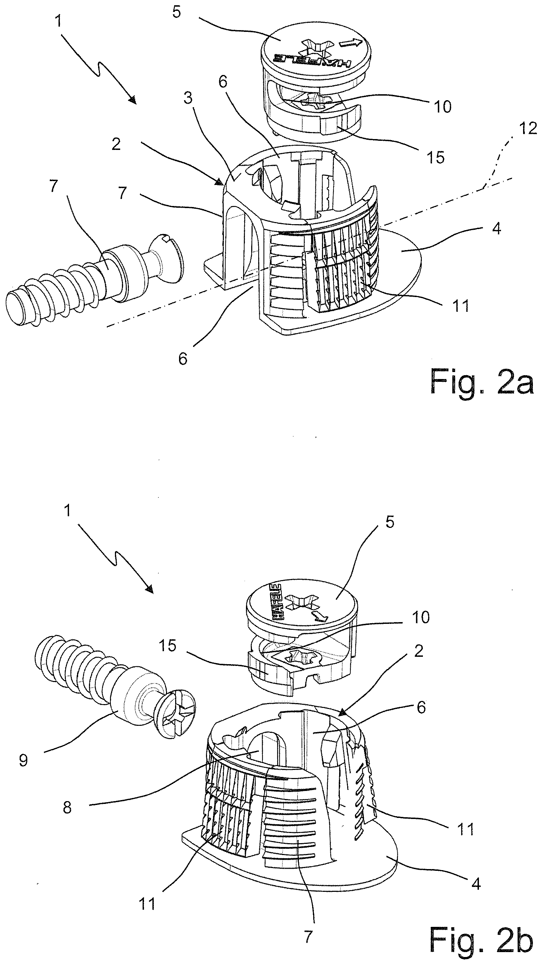

Der in Fign. 1 und 2 gezeigte Spreizverbinder **1** dient zum Verbinden zweier Möbelteile (nicht gezeigt). In **Fign. 1a-1c** ist der Spreizverbinder 1 im zusammengebauten Zustand und in **Fign. 2a, 2b** in einer Explosionsdarstellung gezeigt.

Der Spreizverbinder 1 umfasst einen Einbautopf **2** (z.B. aus Kunststoff), der mit seinem Topfboden **3** voran in eine Topfbohrung des einen Möbelteils eingepresst wird, bis er andernends mit einem nach außen über die hohlzylindrische Topfwandung 3 vorstehenden Anschlagrand **4** an dem einen Möbelteil anliegt, sowie ein innerhalb des Einbautopfes 3 drehbar gelagertes Anzugselement **5** (z.B. Zinkdruckguss), das über eine topfbodenseitige Öffnung **6** in den Einbautopf 2 rastend eingesetzt ist.

Der Einbautopf 2 weist in seiner hohlzylindrischen Topfwandung 7 eine bis in den Anschlagrand 4 hinein offene Wandöffnung **8** auf, durch die ein Spannbolzen **9** des anderen Möbelteils hindurch- und in das Anzugselement 5 eingreift. Das Anzugselement 5 hat eine innere Exzenterfläche **10**, um durch Drehen des Anzugelements 5 den Kopf des Spannbolzens 9 zu hintergreifen und dadurch den Spannbolzen 9 anzuziehen. Das Anzugselement 5 weist auf seiner dem Topfboden 3 abgewandten Seite eine Werkzeugaufnahme (nicht gezeigt), z.B. einen Kreuzschlitz auf, um bei eingepresstem Spreizverbinder 1 das Anzugselement 5 drehen zu können.

In der hohlzylindrischen Topfwandung 7 sind zwei einander bezüglich des Anzugselements 5 gegenüberliegende Spreiziaschen **11** freigeschnitten, die an dem dem Topfboden 3 zugewandten Endbereich der hohlzylindrischen Topfwandung 7 - beabstandet zum Topfboden 3 - an der hohlzylindrischen Topfwandung 7 angebunden und jeweils um eine tangential zur hohlzylindrischen Topfwandung 7 und parallel zum Topfboden 3 verlaufende Achse **12** schwenkbar sind. Die beiden Spreizlaschen 11 erstrecken sich jeweils mit ihrem freien Laschenende 13 in Richtung auf den Anschlagrand 4 und sind von diesem axial beabstandet, bevorzugt um ca. 1 bis 3 mm. Dadurch bilden die dem Anschlagrand 4 zugewandten Kanten der freien Laschenenden 13 jeweils einen entgegen der Einpressrichtung des Einbautopfes wirkenden Hinterschnitt, der sich in das Holzmaterial einer Bohrungswandung eingräbt und für eine zusätzliche Verankerung sorgt.

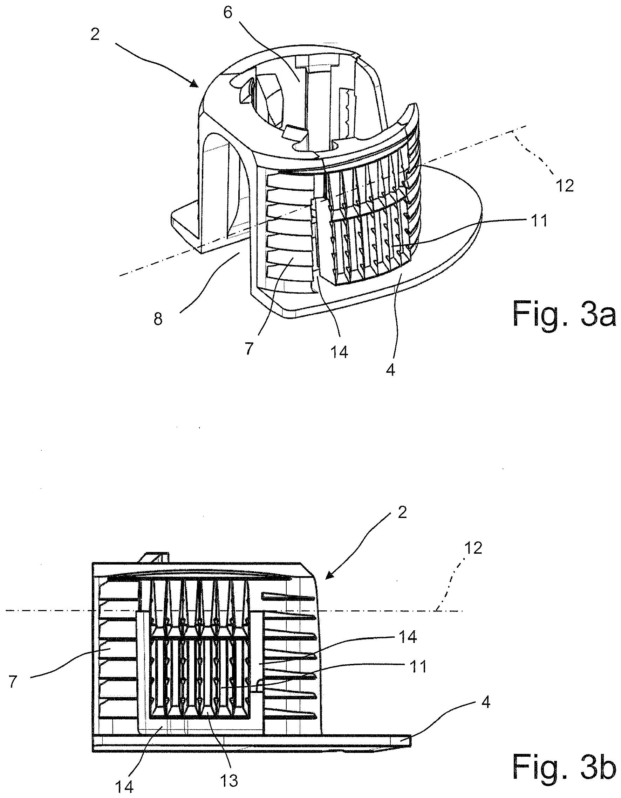

Wie in **Fign. 3a, 3b** gezeigt, sind die beiden Spreizlaschen 11 durch einen U-förmigen Schnitt **14** freigeschnitten, wodurch die hohlzylindrische Topfwandung 3 zwischen dem freien Laschenende 11 und dem Anschlagrand 4 ausgespart ist.

Das Anzugselement 5 weist zwei äußere Exzenterflächen **15** auf zum Aufspreizen der beiden Spreizlaschen 11, um durch Drehen des Anzugelements 5 die beiden Spreizlaschen 11 aus der hohlzylindrischen Topfwandung 7 heraus nach außen abzuspreizen.

## Patentansprüche

1. Spreizverbinder (1) zum Verbinden zweier Möbelteile, umfassend einen Einbautopf (2), der mit seinem Topfboden (3) voran in eine Topfbohrung des einen Möbelteils einpressbar ist und dessen hohlzylindrische Topfwandung (7) eine Wandöffnung (8) und mindestens eine in der hohlzylindrischen Topfwandung (7) freigeschnittene, um eine tangential zur hohlzylindrischen Topfwandung (7) verlaufende Achse (12) schwenkbare Spreizlasche (11) aufweist, sowie ein innerhalb des Einbautopfes (7) drehbar gelagertes Anzugselement (5) zum Anziehen eines durch die Wandöffnung (8) hindurchgreifenden Spannbolzens (9) des anderen Möbelteils, wobei das Anzugselement (5) eine äußere Exzenterfläche (15) zum Aufspreizen der mindestens einen Spreizlasche (11) aufweist,
**dadurch gekennzeichnet,**
**dass** sich die mindestens eine Spreizlasche (11) mit ihrem freien Laschenende (13) in axialer Richtung fort von dem Topfboden (3) erstreckt.

2. Spreizverbinder nach Anspruch 1, **dadurch gekennzeichnet, dass** die mindestens eine Spreizlasche (11) an dem dem Topfboden (3) zugewandten Endbereich der hohlzylindrischen Topfwandung (7) angebunden ist.

3. Spreizverbinder nach Anspruch 1 oder 2, **dadurch gekennzeichnet, dass** die mindestens eine Spreizlasche (11) axial beabstandet zum Topfboden (3) an der hohlzylindrischen Topfwandung (7) angebunden ist.

4. Spreizverbinder nach einem der vorhergehenden Ansprüche, **dadurch gekennzeichnet, dass** das freie Laschenende (13) der mindestens einen Spreizlasche (11) von einem nach außen über die hohlzylindrische Topfwandung (3) vorstehenden Anschlagrand (4) des Einbautopfes (2) axial beabstandet ist.

5. Spreizverbinder nach Anspruch 4, **dadurch gekennzeichnet, dass** das freie Laschenende (13) der mindestens einen Spreizlasche (11) von dem Anschlagrand (4) um mindestens 1mm, vorzugsweise um mindestens 2mm, beabstandet ist.

6. Spreizverbinder nach Anspruch 4 oder 5, **dadurch gekennzeichnet, dass** die hohlzylindrische Topfwandung (7) zwischen dem freien Laschenende (13) und dem Anschlagrand (4) ausgespart ist.

7. Spreizverbinder nach einem der vorhergehenden Ansprüche, **dadurch gekennzeichnet, dass** die mindestens eine Spreizlasche (11) in der hohlzylindrischen Topfwandung (7) durch einen U-förmigen Schnitt (14) freigeschnitten ist.

8. Spreizverbinder nach einem der vorhergehenden Ansprüche, **dadurch gekennzeichnet, dass** die hohlzylindrische Topfwandung (7) mindestens zwei einander bezüglich des Anzugselements (5) gegenüberliegende freigeschnittene Spreizlaschen (11) aufweist.

## Claims

1. Expanding connector (1) for connecting two furniture parts, comprising a built-in pot (2) which can be pressed, pot bottom (3) first, into a housing bore of one furniture part and the hollow-cylindrical pot wall (7) of which has a wall opening (8) and at least one spreading tab (11) which is cut free in the hollow-cylindrical pot wall (7) and is pivotable about an axis (12) running tangentially to the hollow-cylindrical pot wall (7), as well as a tightening element (5), rotatably mounted inside the built-in pot (2), for tightening a fastening bolt (9) of the other furniture part which passes through the wall opening (8), the tightening element (5) having an outer eccentric surface (15) for spreading the at least one spreading tab (11),
**characterised in that**
the at least one spreading tab (11) extends with its free tab end (13) in the axial direction away from the pot bottom (3).

2. Expanding connector according to claim 1, **characterised in that** the at least one spreading tab (11) is attached at the end region of the hollow-cylindrical pot wall (7) facing the pot bottom (3).

3. Expanding connector according to claim 1 or 2, **characterised in that** the at least one spreading tab (11) is attached to the hollow-cylindrical pot wall (7) spaced apart axially from the pot bottom (3).

4. Expanding connector according to any one of the preceding claims, **characterised in that** the free tab end (13) of the at least one spreading tab (11 ) is spaced apart axially from a stop edge (4) of the built-in pot (2) that protrudes outwards beyond the hollow-cylindrical pot wall (3).

5. Expanding connector according to claim 4, **characterised in that** the free tab end (13) of the at least one spreading tab (11) is spaced apart from the stop edge (4) by at least one 1 mm, preferably by at least 2 mm.

6. Expanding connector according to claim 4 or 5, **characterised in that** the hollow-cylindrical pot wall (7) is cut out between the free tab end (13) and the stop edge (4).

7. Expanding connector according to any one of the preceding claims, **characterised in that** the at least one spreading tab (11) is cut free in the hollow-cylindrical pot wall (7) by a U-shaped cut (14).

8. Expanding connector according to any one of the preceding claims, **characterised in that** the hollow-cylindrical pot wall (7) has at least two spreading tabs (11) which have been cut free and face one another with respect to the tightening element (5).

## Revendications

1. Connecteur à expansion (1) pour relier deux parties de meuble, comprenant un boîtier encastrable (2), qui peut être emmanché avec son fond de boîtier (3) en avant dans un perçage en forme de boîtier d'une des parties de meuble et dont la paroi de boîtier (7) cylindrique creuse présente une ouverture de paroi (8) et au moins une patte à expansion (11), dégagée par découpage dans la paroi de boîtier (7) cylindrique creuse et pouvant pivoter autour d'un axe (12) s'étendant tangentiellement à la paroi de boîtier (7) cylindrique creuse, et comprenant un élément de serrage (5), monté à rotation à l'intérieur du boîtier encastrable (2) et destiné à serrer un boulon de serrage (9) de l'autre partie de meuble qui passe par l'ouverture de paroi (8), sachant que l'élément de serrage (5) présente une surface extérieure excentrique (15) pour assurer l'expansion de la patte à expansion (11) au moins unique,
**caractérisé en ce que** la patte à expansion (11) au moins unique s'étend, par son extrémité libre (13), en éloignement du fond de boîtier (3) en direction axiale.

2. Connecteur à expansion selon la revendication 1, **caractérisé en ce que** la patte à expansion (11) au moins unique est rattachée à la paroi de boîtier (7) cylindrique creuse par sa région terminale tournée vers le fond de boîtier (3).

3. Connecteur à expansion selon la revendication 1 ou 2, **caractérisé en ce que** la patte à expansion (11) au moins unique est rattachée à la paroi de boîtier (7) cylindrique creuse à distance axiale du fond de boîtier (3).

4. Connecteur à expansion selon l'une des revendications précédentes, **caractérisé en ce que** l'extrémité libre (13) de la patte à expansion (11) au moins unique est axialement distante d'un bord de butée (4) du boîtier encastrable (2) qui dépasse de la paroi de boîtier (7) cylindrique creuse vers l'extérieur.

5. Connecteur à expansion selon la revendication 4, **caractérisé en ce que** l'extrémité libre (13) de la patte à expansion (11) au moins unique est distante du bord de butée (4) d'au moins 1 mm, de préférence d'au moins 2 mm.

6. Connecteur à expansion selon la revendication 4 ou 5, **caractérisé en ce que** la paroi de boîtier (7) cylindrique creuse est évidée entre l'extrémité libre (13) de la patte et le bord de butée (4).

7. Connecteur à expansion selon l'une des revendications précédentes, **caractérisé en ce que** la patte à expansion (11) au moins unique est dégagée dans la paroi de boîtier (7) cylindrique creuse par une coupe (14) en forme de U.

8. Connecteur à expansion selon l'une des revendications précédentes, **caractérisé en ce que** la paroi de boîtier (7) cylindrique creuse présente au moins deux pattes à expansion (11) dégagées par découpage, mutuellement opposées par rapport à l'élément de serrage (5).
